# EUROPÄISCHE PATENTANMELDUNG

(11) **EP 0 814 292 A2**
(43) Veröffentlichungstag der Anmeldung: **29.12.1997**
(21) Anmeldenummer: 97109344.8
(22) Anmeldetag: 10.06.1997
(51) Int. Cl.: F16L 33/24, H02G 3/06

(54) **Schlauchverschraubung**

(30) Priorität: 20.06.1996 DE 29610828 U
(71) Anmelder: Lagra Elektrotechnik GmbH, 69245 Bammental (DE)
(72) Erfinder: Landgraf, Gerhard, 69151 Neckargemünd (DE); Kloss, Achim, 69115 Heidelberg (DE)
(74) Vertreter: Meyer-Roedern, Giso, Dr.

(57) **Zusammenfassung**

Die Schlauchverschraubung hat einen am Schlauchende befestigbaren Klemmhalter und ein Verschraubungsteil daran. Der Klemmhalter weist einen Ringspalt (16) auf, an dessen Mantel ein Gewinde zum Ein- und Ausschrauben des Schlauchs vorgesehen ist. Der Ringspalt (16) verjüngt sich in Schlaucheinschraubrichtung.

## Beschreibung

Die Erfindung betrifft eine Schlauchverschraubung mit einem am Schlauchende befestigbaren Klemmhalter und mit einem Verschraubungsteil daran.

Aus der Praxis sind Kabelschutzschläuche bekannt, die als mechanischer Schutz für darin verlegte Kabel und sonstige elektrische Leitungen dienen. Schlauchverschraubungen kommen zum Einsatz, um Kabelschutzschläuche an elektrischen Anlagenkomponenten und speziell den zugehörigen Schaltschränken anzubringen.

Bei einer aus der Praxis bekannten und bewährten Schlauchverschraubung LAGRA-UNI-VS der Anmelderin besteht der Klemmhalter aus einem das Schlauchende außen umgreifenden Klemmkäfig und einer den Klemmkäfig außen beaufschlagenden und zusammendrückenden Überwurfmutter. Nachteilig dabei ist der relativ große Außendurchmesser des Klemmhalters verglichen mit dem Außendurchmesser des Schlauchs. Auch besteht der Klemmhalter aus zwei lösbaren Teilen, die bei grober Unachtsamkeit falsch herum montiert sowie auch verloren gehen können.

Aufgabe der Erfindung ist es, eine schlankere, d. h. im Durchmesser weniger auftragende Schlauchverschraubung zu schaffen, die sich für den Anwender als ein Stück darstellt und entsprechend montagefreundlich und sicher ist.

Diese Aufgabe wird mit einer Schlauchverschraubung der eingangs genannten Art dadurch gelöst, daß der Klemmhalter einen Ringspalt aufweist, an dessen Mantel ein Gewinde zum Ein- und Ausschrauben des Schlauchs vorgesehen ist, und daß sich der Ringspalt in Schlaucheinschraubrichtung verjüngt.

Die erfindungsgemäße Schlauchverschraubung ist für alle gängigen Kabelschutzschläuche einer bestimmten Standardgröße geeignet, die üblicherweise durch den Gewindetyp der Schlauchverschraubung identifiziert wird. Erwähnt seien die verbreiteten Panzergewindetypen PG 7, 9, 11, 13,5, 16, 21, 29, 36, 42 und 48 und die entsprechenden Größenabstufungen für metrische Gewinde nach ISO, Zollgewinde und NPD Gewinde. Die Eignung der erfindungsgemäßen Schlauchverschraubung ist unabhängig davon, ob die Schläuche glatt sind oder eine gewellte oder spiralige Struktur und dementsprechend recht unterschiedliche Flexibilität haben. Auch werden die Maßtoleranzen der Schläuche problemlos bewältigt. Das Gewinde der erfindungsgemäßen Schlauchverschraubung erfaßt somit alle gängigen Kabelschutzschläuche zum Ein- und Auschrauben an dem Klemmhalter.

Bei einer bevorzugten Ausführungsform ist der Innenmantel des Klemmhalter-Ringspalts kreiszylindrisch und mit einem Außengewinde versehen. Für den Außenmantel des Ringspalts empfiehlt sich eine den Ringspalt in Schlaucheinschraubrichtung verjüngende Konizität.

Umgekehrt könnte aber auch der Außenmantel des Klemmhalter-Ringspalts kreiszylindrisch und mit einem Innengewinde versehen sein. Dann empfiehlt sich eine den Ringspalt verjüngende Konizität für den Innenmantel des Ringspalts.

Der Ringspalt des Klemmhalters hat vorzugsweise einen ebenen Boden, an dem der gänzlich eingeschraubte Schlauch zum Anschlag kommt. Einschraubtiefe und Klemmkraft auf den Schlauch sind so in wohldefinierter Weise begrenzt.

Bei einer bevorzugten Ausführungsform ist der Klemmhalter ein Kreisring mit einer kreiszylindrischen Innenhülse, mit einem davon radial nach außen abstehenden umlaufenden Bodenring und mit einer außen an dem Bodenring ansetzenden, zu der Innenhülse koaxialen Außenhülse, die den Ringspalt begrenzen. Vorzugsweise hat die Innenhülse ein Außengewinde zum Ein- und Ausschrauben des Schlauchs und die Außenhülse eine Konizität am Innenmantel.

Bei einer bevorzugten Ausführungsform steht die Innenhülse über die Außenhülse axial vor. Das erleichtert das Einschrauben des Schlauchs.

Am Außenmantel der Außenhülse sind vorzugsweise Fingerrippen ausgebildet.

Gegenstand der Erfindung ist eine Typenserie von Schlauchverschraubungen, die im Aufbau des Klemmhalters übereinstimmen und unterschiedliche Verschraubungsteile haben.

Bei einem im Aufbau besonders einfachen Typ 1 ist das Verschraubungsteil eine mit dem Klemmhalter starr verbundene Gewindebuchse.

Bei weiteren Typen 2 und 3 besteht Drehfreiheit zwischen dem Klemmhalter und den zugehörigen Verschraubungsteilen. Es wird so auf einfache, wirkungsvolle Weise eine Torsionsbelastung des Schlauchs vermieden.

Bei Typ 2 und 3 der Schlauchverschraubung ist mit dem Klemmhalter eine Lagerbuchse starr verbunden, auf der das jeweilige Verschraubungsteil drehbar gelagert ist. Der Klemmhalter mit Lagerbuchse ist bei Typ 2 und 3 im Aufbau gleich.

Bei Typ 2 ist das Verschraubungsteil eine Gewindebuchse mit einem Außengewinde. Ein Schlauch kann so in vorteilhafter Weise an seinem einen Ende mit der starren Gewindebuchse von Typ 1 und an seinem anderen Ende mit der drehbaren Gewindebuchse von Typ 2 verschraubt werden.

Bei einer bevorzugten Ausführungsform ist an die drehbare Gewindebuchse von Typ 2 ein Außensechskant angeformt.

Bei Typ 3 ist das Verschraubungsteil ein Anschlußhalter mit einem auf der Lagerbuchse sitzenden Lagerring und wenigstens einem daran ansetzenden Montagesteg mit einer oder mehreren Öffnung(en) zum Festschrauben. Typ 3 ist besonders geeignet für eine Schlauchverschraubung an der Klapptür eines Schaltschranks. Es wird so dem sich Verwinden des Schlauchs beim Auf- und Zuklappen der Tür entgegengewirkt.

Bei einer bevorzugten Ausführungsform des Anschlußhalters sind am Außenmantel des Lagerrings Fingerrippen ausgebildet.

Die Erfindung wird im folgenden anhand einer in der Zeichnung dargestellten Typenserie 1 bis 3 von Schlauchverschraubungen näher erläutert. Es zeigen:
- Fig. 1: Schlauchverschraubung Typ 1 in einem Schnitt nach I - I von Fig. 3;
- Fig. 2: Schlauchverschraubung Typ 1 in einer Seitenansicht mit Blick in Richtung II von Fig. 1;
- Fig. 3: eine axiale Draufsicht auf Schlauchverschraubung Typ 1 mit Blick in Richtung III von Fig. 1;
- Fig. 4: einen Schnitt durch den Klemmhalter von Schlauchverschraubung Typ 2 und 3 nach IV - IV von Fig. 6;
- Fig. 5: eine Seitenansicht des Klemmhalters mit Blick in Richtung V von Fig. 4;
- Fig. 6: eine axiale Draufsicht auf den Klemmhalter mit Blick in Richtung VI von Fig. 4;
- Fig. 7: eine halbseitig diametral geschnittene Seitenansicht des Verschraubungsteils von Schlauchverschraubung Typ 2 in Form einer Gewindebuchse mit Außengewinde;
- Fig. 8: eine axiale Draufsicht auf das Verschraubungsteil von Schlauchverschraubung Typ 3 in Form eines Anschlußhalters, halbseitig mit Schnitt nach VIII - VIII von Fig. 9; und
- Fig. 9: eine Draufsicht auf den Anschlußhalter mit Blick in Richtung IX von Fig. 8, teilweise im Schnitt nach X - X von Fig. 8.

Alle in der Zeichnung dargestellten Schlauchverschraubungen haben einen Klemmhalter, mit dem das zu verschraubende Schlauchende seinerseits eine Schraubverbindung eingeht. Der Klemmhalter ist ein Kreisring mit einer kreiszylindrischen Innenhülse 10, einem davon radial nach außen abstehenden, umlaufenden Bodenring 12 und einer am äußeren Rand des Bodenrings 12 ansetzenden Außenhülse 14, die die Innenhülse 10 mit Abstand koaxial gibt. Innenhülse 10, Bodenring 12 und Außenhülse 14 schließen einen Ringspalt 16 zwischen sich ein, in den eine bestimmte Standardgröße von Kabelschutzschlauch paßt. Die Innenhülse 10 hat ein Außengewinde 18 zum Ein- und Ausschrauben des Schlauchs. Die Außenhülse 14 hat an ihrem Innenmantel eine Konizität 20, derart, daß sich der Ringspalt 16 zum Boden hin verjüngt. Am äußeren Rand der Außenhülse 14 erweitert sich deren Konizität 20 in einer das Einschrauben des Schlauchs erleichternden konischen Fase 52.

Am Außenmantel der Außenhülse 14 sind axiale Fingerrippen 22 dreieckigen Querschnitts ausgebildet, an denen sich der Klemmhalter beim Aufschrauben auf den Schlauch bequem fassen und drehen läßt. Um das Aufschrauben zu erleichtern, steht die Innenhülse 10 axial über die Außenhülse 14 vor.

Aufgrund der Konizität 20 der Außenhülse 14 erfährt der Schlauch eine Klemmkraft, die mit zunehmender Einschraubtiefe in den Ringspalt 16 wächst. Seine Endstellung erreicht der Schlauch an der ebenen Innenseite des Bodenrings 12.

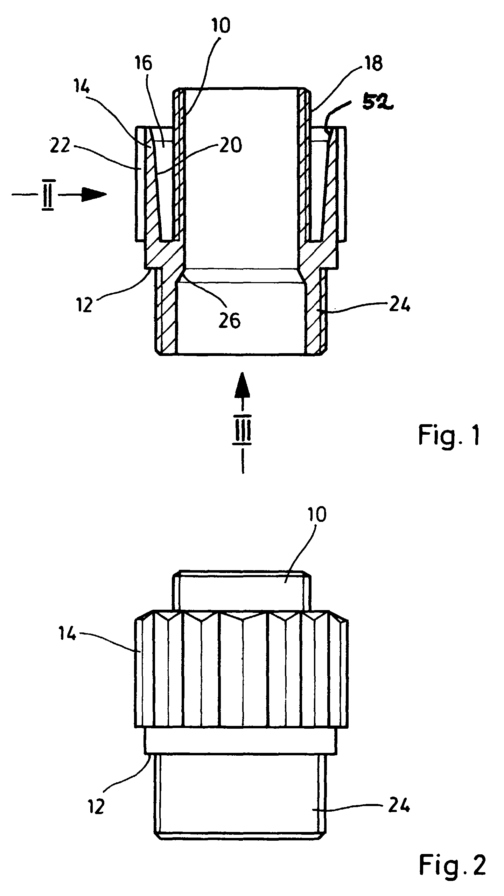

Bei der Schlauchverschraubung Typ 1 gemäß Fig. 1 bis Fig. 3 setzt an dem Bodenring 12 der Klemmhalterung einstückig eine Gewindebuchse 24 an, die mit Innen- und Außenhülse 10, 14 auf gleicher Achse liegt und sich in axial entgegengesetzter Richtung erstreckt.

Der Innendurchmesser der Gewindebuchse 24 ist etwas größer als der der Innenhülse 10. Den Übergang bildet eine konische Fase 26.

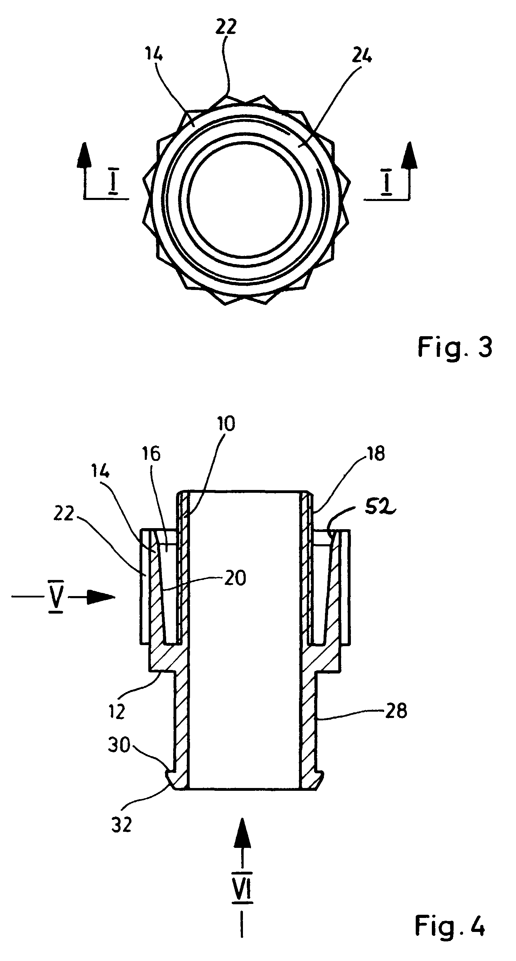

Bei den Schlauchverschraubungen Typ 2 und 3 gemäß Fig. 4 bis Fig. 9 ist anstelle der Gewindebuchse 24 eine kreiszylindrische Lagerbuchse 28 an den Klemmhalter angeformt. Die Lagerbuchse 28 setzt an dem Bodenring 12 des Klemmhalters an. Sie liegt mit dessen Innen- und Außenhülse 10, 14 auf gleicher Achse und erstreckt sich in axial entgegengesetzer Richtung wie diese. Die Innendurchmesser von Lagerbuchse 28 und Innenhülse 10 stimmen überein.

Am äußeren Ende der Lagerbuchse 28 ist ein radial nach außen abstehender umlaufender Bund 30 angeformt,der eine konische Einsteckfase 32 hat. Letztere dient zur Steckmontage eines auf der Lagerbuchse 28 drehbar gelagerten Verschraubungsteils. Das aufgesteckte Verschraubungsteil ist durch den Bund 30 axial fixiert und in einer zerstörungsfrei nicht lösbaren Verbindung gehalten.

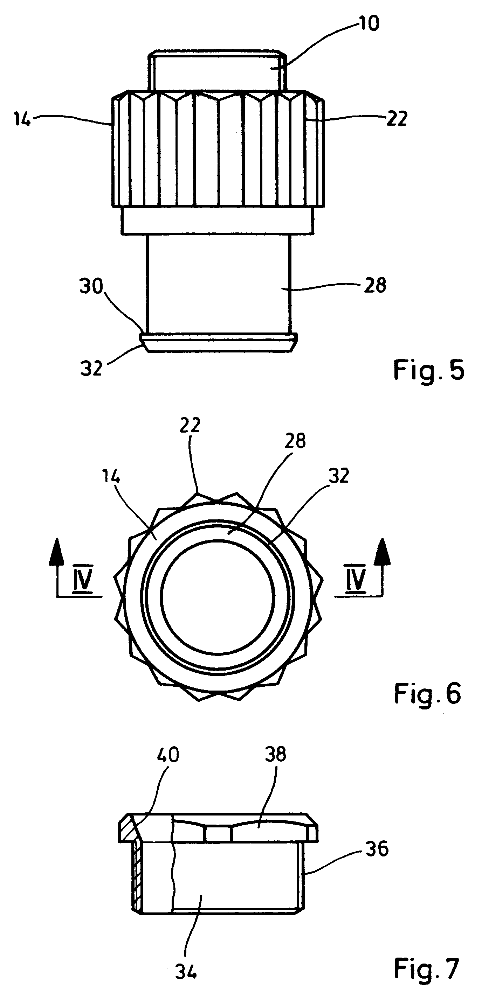

Gemäß Fig. 7 ist bei Typ 2 das Verschraubungsteil eine mit Drehspiel auf die Lagerbuchse 28 passende Gewindebuchse 34 mit einem Außengewinde 36, das zum Einschrauben in eine Gewindebohrung oder Aufschrauben einer Mutter dient. An das dem Bodenring 12 des Klemmhalters benachbarte Ende der Gewindebuchse 34 ist ein Außensechskant 38 angeformt. Der Innenmantel der Gewindebuchse 34 ist auf Höhe des Sechskants 38 mit einer konischen Aufsteckfase 40 versehen.

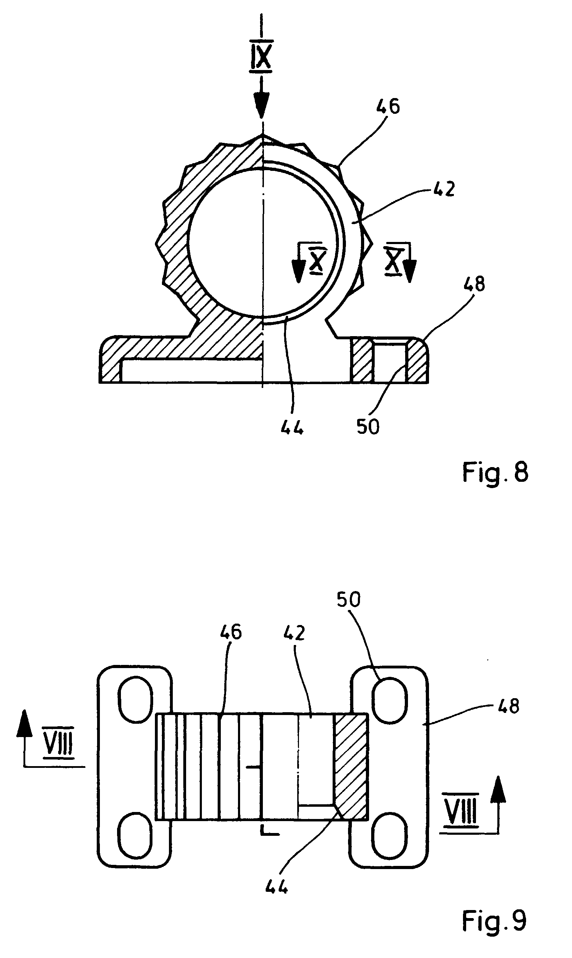

Gemäß Fig. 8 und Fig. 9 ist bei Schlauchverschraubung Typ 3 das Verschraubungsteil ein Anschlußhalter mit einem Lagerring 42, der mit Drehspiel auf die Lagerbuchse 28 paßt. Der Lagerring 42 hat auf der dem Bodenring 12 des Klemmhalters benachbarten Seite eine Aufsteckfase 44. Sein Außenmantel ist mit axialen Fingerrippen 46 dreieckigen Querschnitts versehen.

An dem Lagerring 42 setzt außen ein flacher Montagesteg 48 an, der im wesentlichen die Breite des Lagerrings 42 hat und sich tangential dazu erstreckt. Der Montagesteg 48 verbreitert sich an den Enden zu einem Doppel-T mit vier Langlöchern 50, an denen die Schlauchverschraubung Typ 3 z. B. mit einer Montageschiene an der Tür eines Schaltschranks verschraubt werden kann.

### Liste der Bezugszeichen

- 10: Innenhülse
- 12: Bodenring
- 14: Außenhülse
- 16: Ringspalt
- 18: Außengewinde
- 20: Konizität
- 22: Fingerrippe
- 24: Gewindebuchse
- 26: Fase
- 28: Lagerbuchse
- 30: Bund
- 32: Einsteckfase
- 34: Gewindebuchse
- 36: Außengewinde
- 38: Außensechskant
- 40: Aufsteckfase
- 42: Lagerring
- 44: Aufsteckfase
- 46: Fingerrippe
- 48: Montagesteg
- 50: Langloch
- 52: Fase

## Patentansprüche

1. Schlauchverschraubung mit einem am Schlauchende befestigbaren Klemmhalter und mit einem Verschraubungsteil daran, dadurch gekennzeichnet, daß der Klemmhalter einen Ringspalt (16) aufweist, an dessen Mantel ein Gewinde zum Ein- und Ausschrauben des Schlauchs vorgesehen ist, und daß sich der Ringspalt (16) in Schlaucheinschraubrichtung verjüngt.

2. Schlauchverschraubung nach Anspruch 1, dadurch gekennzeichnet, daß der Innenmantel des Ringspalts (16) kreiszylindrisch und mit einem Außengewinde (18) versehen ist.

3. Schlauchverschraubung nach Anspruch 1 oder 2, dadurch gekennzeichnet, daß der Außenmantel des Ringspalts (16) konisch ist.

4. Schlauchverschraubung nach einem der Ansprüche 1 bis 3, dadurch gekennzeichnet, daß der Ringspalt (16) einen ebenen Boden hat, an dem der gänzlich eingeschraubte Schlauch zum Anschlag kommt.

5. Schlauchverschraubung nach einem der Ansprüche 1 bis 4, dadurch gekennzeichnet, daß der Klemmhalter ein Kreisring mit einer kreiszylindrischen Innenhülse (10), mit einem davon radial nach außen abstehenden umlaufenden Bodenring (12) und mit einer außen an dem Bodenring (12) ansetzenden, zu der Innenhülse (10) koaxialen Außenhülse (14) ist, die den Ringspalt (16) begrenzen.

6. Schlauchverschraubung nach einem der Ansprüche 1 bis 5, dadurch gekennzeichnet, daß die Innenhülse (10) ein Außengewinde (18) zum Ein- und Ausschrauben des Schlauchs und die Außenhülse (14) eine Konizität (20) am Innenmantel hat.

7. Schlauchverschraubung nach einem der Ansprüche 1 bis 6, dadurch gekennzeichnet, daß die Innenhülse (10) über die Außenhülse (14) axial vorsteht.

8. Schlauchverschraubung nach einem der Ansprüche 1 bis 7, dadurch gekennzeichnet, daß am Außenmantel der Außenhülse (14) Fingerrippen (22) ausgebildet sind.

9. Schlauchverschraubung nach einem der Ansprüche 1 bis 8, dadurch gekennzeichnet, daß das Verschraubungsteil eine mit dem Klemmhalter starr verbundene Gewindebuchse (24) ist.

10. Schlauchverschraubung nach einem der Ansprüche 1 bis 8, dadurch gekennzeichnet, daß mit dem Klemmhalter eine Lagerbuchse (28) starr verbunden ist, auf der das Verschraubungsteil drehbar gelagert ist.

11. Schlauchverschraubung nach Anspruch 10, dadurch gekennzeichnet, daß das Verschraubungsteil eine Gewindebuchse (34) mit einem Außengewinde (36) ist.

12. Schlauchverschraubung nach Anspruch 11, dadurch gekennzeichnet, daß an die Gewindebuchse (34) ein Außensechskant (38) angeformt ist.

13. Schlauchverschraubung nach Anspruch 11, dadurch gekennzeichnet, daß das Verschraubungsteil ein Anschlußhalter mit einem auf der Lagerbuchse (28) sitzenden Lagerring (42) und wenigstens einem daran ansetzenden Montagesteg (48) mit einer oder mehreren Öffnung(en) zum Festschrauben ist.

14. Schlauchverschraubung nach Anspruch 13, dadurch gekennzeichnet, daß am Außenmantel des Lagerrings (42) Fingerrippen (46) ausgebildet sind.
